# EUROPÄISCHE PATENTSCHRIFT

(11) **EP 0 965 140 B1**
(45) Veröffentlichungstag und Bekanntmachung des Hinweises auf die Patenterteilung: **30.01.2002**
(21) Anmeldenummer: 98913531.4
(22) Anmeldetag: 27.02.1998
(51) Int. Cl.: H01H 47/32

(54) **STROMGEREGELTE ENDSTUFE FÜR ELEKTROMAGNETISCHE STELLANTRIEBE**
CURRENT-CONTROLLED OUTPUT STAGE FOR ELECTROMAGNETIC ACTUATORS
ETAGE DE SORTIE A REGULATION DE COURANT POUR ACTIONNEURS ELECTROMAGNETIQUES

(30) Priorität: 05.03.1997 DE 19708833
(43) Veröffentlichungstag der Anmeldung: 22.12.1999
(73) Patentinhaber: Mannesmann Rexroth AG, 97816 Lohr am Main (DE)
(72) Erfinder: KISON, Thomas, D-97816 Lohr (DE); MEISSELBACH, Alexander, D-97794 Rieneck (DE)
(86) Internationale Anmeldenummer: DE9800600
(87) Internationale Veröffentlichungsnummer: WO9839787

(56) Entgegenhaltungen:
- EP-A- 0 150 492
- EP-A- 0 443 032
- DE-A- 4 140 586

## Beschreibung

Die Erfindung betrifft eine stromgeregelte Endstufe für elektromagnetische Stellantriebe, insbesondere für als Ventilantriebe verwendete Proportionalmagnete, gemäß dem Oberbegriff des Anspruchs 1.

Eine derartige stromgeregelte Endstufe ist aus der EP 0 443 032 B1 bekannt. Der Leistungsteil der bekannten stromgeregelten Endstufe enthält zwei Transistoren, zwischen denen eine induktive Last angeordnet ist. Der eine Transistor verbindet im leitenden Zustand den einen Anschluß der induktiven Last mit einer Versorgungsspannung. Der andere Transistor verbindet im leitenden Zustand den anderen Anschluß der induktiven Last über einen Meßwiderstand mit Masse. Die an dem Meßwiderstand abfallende Spannung ist auf Massepotential bezogen. Die Transistoren werden gemeinsam von einer getakteten Spannung angesteuert. Eine erste Freilaufdiode ist parallel zu der aus dem mit der Versorgungsspannung verbundenen Transistor und der induktiven Last gebildeten Reihenschaltung angeordnet. Eine zweite Freilaufdiode ist parallel zu der aus dem masseseitigen Transistor und der induktiven Last gebildeten Reihenschaltung angeordnet. Die Flußrichtung der Freilaufdioden ist so gewählt, daß bei gesperrten Transistoren der Strom über die Magnetspule weiterfließt. Der Betrag des von dem über den Meßwiderstand fließenden Strom an dem Meßwiderstand verursachten Spannungsabfalls ist als Regelgröße für den über die induktive Last fließenden Strom dem Istwerteingang eines Stromreglers zugeführt, der entsprechend der Abweichung der Regelgröße von einem Sollwert das Tastverhältnis der dem Leistungsteil der stromgeregelten Endstufe zugeführten getakteten Spannung für die Ansteuerung der Transistoren verändert. Als Tastverhältnis ist das Verhältnis zwischen der Dauer der Flußphase und der Summe aus der Dauer der Flußphase und der Dauer der Löschphase des über die induktive Last fließenden Stromes bezeichnet. Die Auslenkung des Stellantriebes ist sowohl durch den Strom bestimmt, der in der Flußphase über die induktive Last fließt, als auch durch den Strom, der in der Löschphase über die induktive Last fließt. Eine derartige Endstufe, bei der die induktive Last zwischen zwei gemeinsam betätigten elektronischen Schaltern angeordnet ist, verbessert bei niederohmigen induktiven Lasten, wie niederohmigen Magnetspulen von in Ventilantrieben verwendeten Proportionalmagneten, die Dynamik. Bei hochohmigen induktiven Lasten, wie hochohmigen Magnetspulen von in Ventilantrieben verwendeten Proportionalmagneten, besteht dagegen die Gefahr, daß unerwünschte Schwingungen des Stellantriebs verursacht werden. Bei hochohmigen induktiven Lasten ist es daher besser, eine stromgeregelte Endstufe zu verwenden, in der nur ein elektronischer Schalter die induktive Last mit der Versorgungsspannung beaufschlagt.

Der Erfindung liegt die Aufgabe zugrunde, eine stromgeregelte Endstufe der eingangs genannten Art zu schaffen, die es erlaubt, dieselbe stromgeregelte Endstufe sowohl für niederohmige induktive Lasten als auch für hochohmige induktive Lasten zu verwenden, ohne daß sich beim Betrieb von niederohmigen induktiven Lasten die Dynamik verschlechtert und ohne daß beim Betrieb von hochohmigen induktiven Lasten die Gefahr des Auftretens von unerwünschten Schwingungen besteht.

Diese Aufgabe wird durch die im Anspruch 1 gekennzeichneten Merkmale gelöst. Für den Betrieb von hochohmigen induktiven Lasten braucht nur der masseseitige elektronische Schalter ständig in den leitenden Zustand geschaltet zu werden und dem Istwerteingang des Stromreglers anstelle des Betrages der an dem ersten Meßwiderstand abfallenden Spannung die an dem zweiten Meßwiderstand abfallende Spannung zugeführt zu werden. Die an dem zweiten Meßwiderstand abfallende Spannung berücksichtigt sowohl den in der Flußphase als auch den in der Löschphase über die induktive Last fließenden Strom. Da der masseseitige elektronische Schalter ständig geschlossen ist, ist der Fußpunkt des zweiten Meßwiderstandes unabhängig von dem Schaltzustand des anderen Schalters über den geschlossenen ersten elektronischen Schalter und den ersten Meßwiderstand ständig mit Masse verbunden. Um die erfindungsgemäße Endstufe von einem Betrieb von niederohmigen induktiven Lasten auf einen Betrieb von hochohmigen induktiven Lasten umzuschalten, sind keine zusätzlichen Schalter im Leistungsteil der Endstufe erforderlich. Durch die Erfindung verringert sich die Lagerhaltung, da keine unterschiedlichen Endstufen für niederohmige und hochohmige induktiven Lasten erforderlich sind.

Vorteilhafte Weiterbildungen der Erfindung sind in den Unteransprüchen gekennzeichnet. Beide Meßwiderstände sind vorteilhafterweise gleich groß gewählt. Diese Maßnahme führt zu gleich großen Spannungsabfällen an den Meßwiderständen und vereinfacht auch die Lagerhaltung. Die Steuereinrichtung mit nachgeschalteter Schalteinrichtung führt dem Istwerteingang des Stromreglers entweder den Betrag der an dem ersten Meßwiderstand abfallende Spannung oder die an dem zweiten Meßwiderstand abfallende Spannung zu. Für die Umschaltung sind Steuersignale geringer Leistung ausreichend.

Die Erfindung wird im folgenden mit ihren weiteren Einzelheiten anhand eines in den Zeichnungen dargestellten Ausführungsbeispiels näher erläutert. Es zeigen
- Figur 1: das Prinzipschaltbild einer bekannten stromgeregelten Endstufe, von der die Erfindung als Stand der Technik ausgeht, und
- Figur 2: das Prinzipschaltbild eines Ausführungsbeispiels einer stromgeregelten Endstufe gemäß der Erfindung.

Gleiche Bauteile sind in den Figuren mit den gleichen Bezugszeichen versehen.

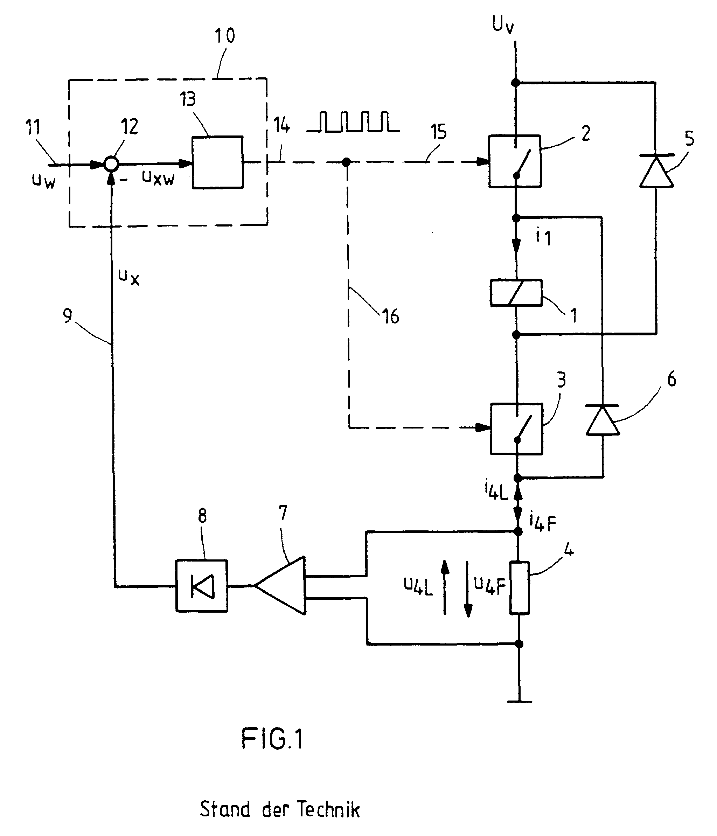

Die Figur 1 zeigt das Prinzipschaltbild der eingangs beschriebenen stromgeregelten Endstufe für elektromagnetische Stellantriebe, von der die Erfindung als Stand der Technik ausgeht. Mit dem Bezugszeichen 1 ist eine induktive Last, nämlich die Magnetspule eines als Ventilantrieb verwendeten Proportionalmagneten, bezeichnet. Die Magnetspule 1 ist zwischen zwei elektronischen Schaltern 2 und 3 angeordnet. Der Schalter 2 verbindet im leitenden Zustand den einen Anschluß der Magnetspule 1 mit einer auf Masse bezogenen Versorgungsspannung U_{V}. Der Schalter 3 verbindet im leitenden Zustand den anderen Anschluß der Magnetspule 1 über einen Meßwiderstand 4 mit Masse. Eine erste Freilaufdiode 5 ist parallel zu der aus der Magnetspule 1 und dem Schalter 2 gebildeten Reihenschaltung geschaltet. Eine zweite Freilaufdiode 6 ist parallel zu der aus dem Schalter 3 und der Magnetspule 1 gebildeten Reihenschaltung angeordnet. Der über die Magnetspule 1 fließende Strom ist mit i₁ bezeichnet. Er fließt sowohl in der Flußphase als auch in der Löschphase über den Meßwiderstand 4. Der in der Flußphase über die Meßwiderstand 4 fließende Strom ist mit i_{4F} bezeichnet. Die in der Flußphase an dem Meßwiderstand 4 abfallende Spannung ist mit u_{4F} bezeichnet. Der in der Löschphase über den Meßwiderstand 4 fließende Strom ist mit i_{4L} bezeichnet. Er fließt in entgegengesetzter Richtung zu dem in der Flußphase fließenden Strom i_{4F}. Entsprechend ist auch die während der Löschphase an dem Meßwiderstand 4 abfallende Spannung u_{4L} entgegengesetzt zu der in der Flußphase an dem Meßwiderstand 4 abfallenden Spannung u_{4F} gerichtet. Die an dem Meßwiderstand 4 abfallende Spannung ist einem Verstärker 7 zugeführt, der eine Pegelanpassung durchführt. Eine Gleichrichteranordnung 8 bildet den Betrag der Ausgangsspannung des Verstärkers 7. Durch die Gleichrichtung der Ausgangsspannung des Verstärkers 7 wird die Vorzeichenumkehr des in der Löschphase über den Meßwiderstand 4 fließenden Stromes i_{4L} berücksichtigt. Die Ausgangsspannung der Gleichrichteranordnung 8 ist über eine Leitung 9 dem Istwerteingang eines Stromreglers 10 zugeführt. Da diese Spannung die Regelgröße der stromgeregelten Endstufe ist, ist sie mit u_{X} bezeichnet. Dem Sollwerteingang des Stromreglers 10 ist über eine Leitung 11 eine mit u_{W} bezeichnete Spannung zugeführt. Die Spannung u_{W} dient als Sollwert für die stromgeregelten Endstufe. Der Stromregler 10 weist einen Vergleicher 12 auf, der aus den Spannungen u_{W} und u_{X} die mit u_{XW} bezeichnete Regelabweichung bildet, und einen Regelverstärker 13, der die Regelabweichung entsprechend dem Zeitverhalten des Regelverstärkers 13 in eine analoge Stellgröße umwandelt und daran anschließend das analoge Signal in ein Rechtecksignal umformt, dessen Tastverhältnis der analogen Stellgröße entspricht. Das rechteckförmige Ausgangssignal des Regelverstärkers 13 ist als Ausgangssignal des Stromreglers 10 über Leitungen 14 und 15 dem Steuereingang des elektronischen Schalters 2 und gleichzeitig über Leitungen 14 und 16 dem Steuereingang des elektronischen Schalters 3 zugeführt. Das den Steuereingängen der elektronischen Schalter 2 und 3 zugeführte Rechtecksignal betätigt die elektronische Schalter 2 und 3 gemeinsam. Die elektronischen Schalter 2 und 3 sind entweder beide geschlossen oder beide geöffnet. In der Flußphase, wenn die beiden elektronischen Schalter 2 und 3 geschlossen sind, fließt von der Versorgungsspannung U_{V} über die Magnetspule 1 und den Meßwiderstand 4 Strom nach Masse. In der Löschphase, wenn die elektronischen Schalter 2 und 3 geöffnet sind, fließt der über die Magnetspule 1 fließende Strom i₁ weiter und zwar über die Freilaufdiode 5, die Versorgungsspannung U_{V}, den Meßwiderstand 4 und die Freilaufdiode 6 zurück zu der Magnetspule 1.

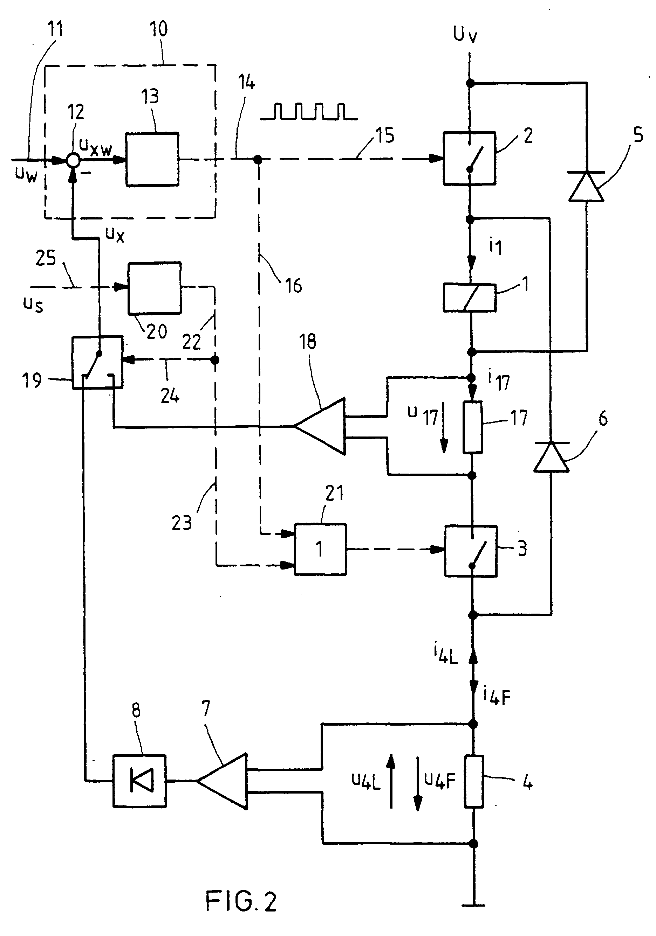

Die Figur 2 zeigt eine stromgeregelte Endstufe gemäß der Erfindung. Diese stromgeregelte Endstufe geht von der in der Figur 1 dargestellten Endstufe aus. Gemäß der Erfindung ist zwischen der Magnetspule 1 und dem elektronischen Schalter 3 ein weiterer Meßwiderstand 17 angeordnet. Der Meßwiderstand 17 ist gleich groß wie der Meßwiderstand 4 gewählt. Der über den Meßwiderstand 17 fließende Strom ist mit i₁₇ bezeichnet, die an dem Meßwiderstand 17 abfallende Spannung ist mit u₁₇ bezeichnet. Die Freilaufdiode 5 ist - wie in der Figur 1 - parallel zu der Reihenschaltung aus der Magnetspule 1 und dem elektronischen Schalter 2 angeordnet. Die Freilaufdiode 6 ist parallel zu der Reihenschaltung aus dem elektronischen Schalter 3, dem Meßwiderstand 17 und der Magnetspule 1 angeordnet. Die an dem Meßwiderstand 17 abfallende Spannung u₁₇ ist einem Verstärker 18 zugeführt, der eine Pegelanpassung vornimmt. Eine Schalteinrichtung 19, führt dem Istwerteingang des Stromreglers 10 entweder die Ausgangsspannung der Gleichrichteranordnung 8 oder die Ausgangsspannung des Verstärkers 18 als Spannung u_{X} zu. Der Schalteinrichtung 19 ist eine Steuereinrichtung 20 vorgeschaltet. Die Leitung 16 ist mit einem ersten Eingang eines ODER-Gliedes 21 verbunden. Der Ausgang der Steuereinrichtung 20 ist über Leitungen 22 und 23 mit einem zweiten Eingang des ODER-Gliedes 21 verbunden. Der Ausgang des ODER-Gliedes 21 ist mit dem Steuereingang des elektronischen Schalters 3 verbunden. Der Ausgang der Steuereinrichtung 20 ist über die Leitung 22 und eine Leitung 24 mit dem Steuereingang der Schalteinrichtung 19 verbunden. Das Ausgangssignal der Steuereinrichtung 20 nimmt in Abhängigkeit von einem Steuersignal u_{S}, das der Steuereinrichtung 20 über eine Leitung 25 zugeführt ist, zwei verschiedene Werte an, z. B. den unteren und den oberen Spannungswert der getakteten Ausgangsspannung des Stromreglers 10.

Liegt keine Spannung am Ausgang der Steuereinrichtung 20 an, befindet sich die Schalteinrichtung 19 in ihrer Ruhestellung. In dieser Stellung verbindet sie die Gleichrichteranordnung 8 mit dem Istwerteingang des Stromreglers 10. Da dem ODER-Glied 21 über die Leitung 23 keine Spannung zugeführt ist, ist ihm nur die getaktete Ausgangsspannung des Stromreglers 10 über die Leitung 16 zugeführt. Die stromgeregelte Endstufe verhält sich daher wie die anhand der Figur 1 beschriebene stromgeregelte Endstufe, bei der die beiden elektronischen Schalter 2 und 3 gemeinsam geöffnet und geschlossen werden und dem Istwerteingang des Stromreglers 10 der Betrag der an dem Meßwiderstand 4 abfallenden Spannung zugeführt ist.

Liegt dagegen am Ausgang der Steuereinrichtung 20 Spannung an, nimmt die Schalteinrichtung 19 die Arbeitsstellung ein und verbindet den Ausgang des Verstärkers 18 mit dem Istwerteingang des Stromreglers 10. Dem ODER-Glied 21 ist über die Leitungen 14 und 16 die getaktete Ausgangsspannung des Stromreglers 10 und über die Leitungen 22 und 23 die am Ausgang der Steuereinrichtung 20 anliegende Spannung zugeführt. Dem Steuereingang des elektronischen Schalters 3 ist somit unabhängig von dem Tastverhältnis der Ausgangsspannung des Stromreglers 10 ständig ein Steuersignal zugeführt. Der elektronische Schalter 3 ist daher so lange geschlossen, wie am Ausgang der Steuereinrichtung 20 Spannung anliegt. Die getaktete Ausgangsspannung des Stromreglers 10 öffnet und schließt jetzt nur noch den elektronischen Schalter 2. In der Flußphase, wenn auch der elektronische Schalter 2 geschlossen ist, fließt von der Versorgungsspannung Uᵥ Strom über die Magnetspule 1 und über die Meßwiderstände 17 und 4 nach Masse. Der über den Meßwiderstand 17 fließende Strom i₁₇ ist gleich dem über die Magnetspule 1 fließenden Strom i₁. In der Löschphase ist nur der elektronische Schalter 2 geöffnet. Der über die Magnetspule 1 fließende Strom i₁ teilt sich in zwei Teilströme auf, von denen der größere über den Meßwiderstand 17, den geschlossenen elektronischen Schalter 3 und die Freilaufdiode 6 zurück zu der Magnetspule 1 fließt. Ein vernachlässigbar kleiner Teilstrom fließt von der Magnetspule 1 über die Freilaufdiode 5, die Versorgungsspannung U_{V}, den Meßwiderstand 4 und die Freilaufdiode 6. Die an dem Meßwiderstand 17 abfallende Spannung u₁₇ ist daher sowohl während der Flußphase als auch während der Löschphase ein Maß für den über die Magnetspule 1 fließenden Strom i₁. Da der über den Meßwiderstand 17 fließende Strom i₁₇ in der Flußphase und in der Löschphase in derselben Richtung fließt, ist keine Gleichrichtung der an dem Meßwiderstand 17 abfallenden Spannung u₁₇ erforderlich.

Im Zusammenhang mit dem ohmschen Widerstand von Magnetspulen sind vorstehend die Begriffe "niederohmig" und "hochohmig" verwendetet worden. Bei einer "niederohmigen" Magnetspule handelt es sich um Widerstandswerte in der Größenordnung von 2 Ohm, bei einer "hochohmigen" Magnetspule handelt es sich um Widerstandswerte in dem Bereich zwischen 5 Ohm und 19 Ohm. Der ohmsche Widerstand der Meßwiderstände 4 und 17 liegt bei 0,1 Ohm, ist also mindestens 20 Mal kleiner als der ohmsche Widerstand einer Magnetspule.

Die Umschaltung der in der Figur 2 dargestellten stromgeregelten Endstufe zwischen einem optimalen Betrieb für niederohmige Magnetspulen und einem optimalen Betrieb für hochohmige Magnetspulen erfolgt nicht durch zusätzliche Schalter im Leistungsteil der stromgeregelten Endstufe. Für die Umschaltung genügen Steuersignale wie das der Steuerschaltung 20 zugeführte Steuersignal u_{S}. Die der Verarbeitung von Signalen dienenden Baugruppen, wie z. B. der Stromregler 10, die Steuereinrichtung 20, die Schalteinrichtung 19, können auch durch entsprechend programmierte Recheneinrichtungen realisiert werden, wobei analoge Signale in an sich bekannter Weise durch Analog/Digital-Wandler in digitale Signale umzuwandeln sind.

## Patentansprüche

1. Stromgeregelte Endstufe für elektromagnetische Stellantriebe, insbesondere für als Ventilantriebe verwendete Proportionalmagnete, die den als Regelgröße dienenden Istwert eines eine Magnetspule (1) des Stellantriebes durchfließenden Stromes ermittelt und unter Berücksichtigung eines vorgegebenen Sollwertes die Magnetspule mit einer getakteten Spannung beaufschlagt, deren Tastverhältnis ein Maß für die Auslenkung des Stellantriebes ist,
- mit einem Stromregler (10), der entsprechend der Abweichung der Regelgröße von dem Sollwert das Tastverhältnis der getakteten Spannung verändert,
- mit einem Leistungsteil mit zwei entsprechend dem Tastverhältnis der Ausgangsspannung des Stromreglers gesteuerten elektronischen Schaltern (2, 3), zwischen denen die Magnetspule angeordnet ist, von denen der eine Schalter (2) im leitenden Zustand einen Anschluß der Magnetspule mit einer Versorgungsspannung verbindet und der andere Schalter (3) im leitenden Zustand den anderen Anschluß der Magnetspule über einen ersten Meßwiderstand (4) mit Masse verbindet, sowie mit zwei Dioden (5, 6) für den bei geöffneten Schaltern über die Magnetspule fließenden induzierten Strom,
- wobei die erste Diode (6) parallel zu der aus dem masseseitigen Schalter (3) und der Magnetspule (1) gebildeten Reihenschaltung geschaltet ist,
- die zweite Diode (5) parallel zu der aus dem mit der Versorgungsspannung (Uᵥ) verbundenen Schalter (2) und der Magnetspule (1) gebildeten Reihenschaltung angeordnet ist,
- und bei gemeinsamer Betätigung der beiden Schalter (2, 3) der Betrag der an dem Meßwiderstand (4) abfallenden Spannung (u_{4F}, u_{4L}) dem Istwerteingang des Stromreglers (10) als Maß für den über die Magnetspule (1) fließenden Strom (i₁) zugeführt ist,
**dadurch gekennzeichnet,**
- **daß** zwischen dem masseseitigen Schalter (3) und der Magnetspule (1) ein zweiter Meßwiderstand (17) angeordnet ist, und
- **daß** bei ständig in den leitenden Zustand geschaltetem masseseitigen Schalter (3) die an dem zweiten Meßwiderstand (17) abfallende Spannung (u₁₇) dem Istwerteingang des Stromreglers (10) als Maß für den über die Magnetspule (1) fließenden Strom (i₁) zugeführt ist.

2. Stromgeregelte Endstufe nach Anspruch 1, **dadurch gekennzeichnet, daß** die Meßwiderstände (4, 17) gleich groß sind.

3. Stromgeregelte Endstufe nach Anspruch 1 oder Anspruch 2, **dadurch gekennzeichnet, daß** eine Steuereinrichtung (20) mit einer nachgeschalteten Schalteinrichtung (19) vorgesehen ist, die dem Istwerteingang des Stromreglers (10) entweder den Betrag der an dem ersten Meßwiderstand (4) abfallenden Spannung (u_{4F}, u_{4L}) oder die an dem zweiten Meßwiderstand (17) abfallende Spannung (u₁₇) zuführt.

4. Stromgeregelte Endstufe nach Anspruch 3, **dadurch gekennzeichnet, daß** das Schließen und Öffnen der Schalter (2, 3) gemeinsam entsprechend dem Tastverhältnis erfolgt und daß die Schalteinrichtung (19) dem Istwerteingang des Stromreglers (10) den Betrag der an dem ersten Meßwiderstand (4) abfallenden Spannung (u_{4F}, u_{4L}) zuführt.

5. Stromgeregelte Endstufe nach Anspruch 3, **dadurch gekennzeichnet, daß** die Steuereinrichtung (20) den masseseitigen Schalter (3) ständig in den leitenden Zustand schaltet, so daß nur das Schließen und Öffnen des mit der Versorgungsspannung (U_{V}) verbundenen Schalters (2) entsprechend dem Tastverhältnis erfolgt, und daß die Schalteinrichtung (19) dem Istwerteingang des Stromreglers (10) die an dem zweiten Meßwiderstand (17) abfallende Spannung (u₁₇) zuführt.

## Claims

1. A current-controlled output stage for electromagnetic actuators, in particular proportional solenoids used as valve actuators, which registers the actual value of a current, serving as controlled variable, flowing through a solenoid coil (1) of the actuator and, taking into consideration a setpoint, applies to the solenoid coil a clocked voltage, the pulse duty factor of which is a measure for the deflection of the actuator,
- with a current regulator (10) which varies the pulse duty factor of the clocked voltages according to the deviation of the controlled variable from the setpoint,
- with a power section with two electronic switches (2, 3), controlled according to the pulse duty factor of the output voltage of the current regulator, between which is arranged the solenoid coil, of which the one switch (2) in its conductive state connects a terminal of the solenoid coil with a supply voltage and the other switch (3) in its conductive state connects the other terminal of the solenoid coil via a first measuring resistor (4) to ground, and with two diodes (5, 6) for the induced current flowing through the solenoid coil when the switches are open;
- whereby the first diode (6) is connected in parallel to the series circuit formed by the ground-side switch (3) and the solenoid coil (1),
- the second diode (5) is arranged parallel to the series circuit formed by the switch (2), connected with the supply voltage Uᵥ, and the solenoid coil (1),
- and, when the two switches (2, 3) are operated. jointly, the magnitude of the falling voltage (u_{4F}, u_{4L}) at the measuring resistor (4) is fed to the actual value input of the current regulator (10) as a measure of the current (i₁) flowing through the solenoid coil (1),
**characterized in that**
- between the ground-side switch (3) and the solenoid coil (1) is arranged a second measuring resistor (17), and
- that when the ground-side switch (3) is continuously switched to the conductive state, the falling voltage (u₁₇) at the second measuring resistor (17) is fed to the actual value input of the current regulator (10) as a measure of the current (i₁) flowing through the solenoid coil (1).

2. A current-controlled output stage according to Claim 1, **characterized in that** the measuring resistors (4, 17) are of identical size.

3. A current-controlled output stage according to Claim 1 or Claim 2, **characterized in that** a control device (20) with a series-connected switching device (19) is provided which feeds either the magnitude of the falling voltage (u_{4F}, u_{4L}) at the first measuring resistor (4) or the falling voltage (u₁₇) at the second measuring resistor (17) to the actual value input of the current regulator (10).

4. A current-controlled output stage according to Claim 3, **characterized in that** the closing and opening of the switches (2, 3) occurs according to the pulse duty factor and that the switching device (19) feeds the magnitude of the falling voltage (u_{4F}, u_{4L}) at the first measuring resistor (4) to the actual value input of the current regulator (10).

5. A current-controlled output stage according to Claim 3, **characterized in that** the control device (20) of the ground-side switch (3) switches continuously to the conductive state so that only the closing and opening of the switch (2) connected to the supply voltage (U_{V}) occurs according to the pulse duty factor and that the switching device (19) feeds the falling voltage (u₁₇) at the second measuring resistor (17)to the actual value input of the current regulator (10).

## Revendications

1. Un étage de sortie à régulation de courant pour des organes de commande électromagnétiques, en particulier pour des solénoïdes proportionnels utilisés en tant que commande de valve, qui établit la valeur réelle, servant de paramètre de régulation, d'un courant, lequel passe par une bobine (1) de solénoïde de l'organe de commande, et qui, tout en respectant une valeur de consigne donnée au préalable, sollicite la bobine de solénoïde avec une tension cyclique, dont le rapport d'application constitue une mesure de la course de l'organe de commande,
- doté d'un régulateur (10) de courant, qui modifie le rapport d'application de la tension cyclique, en fonction de la différence entre le paramètre de régulation et la valeur de consigne,
- doté d'un élément de puissance, qui est doté de deux commutateurs (2, 3) électroniques, lesquels sont commandés en fonction du rapport d'application de la tension de sortie du régulateur de courant, entre lesquels est disposé le solénoïde, desquels l'un des commutateurs (2), dans son état conducteur, raccorde une connexion du solénoïde à une tension d'alimentation et l'autre commutateur (3), dans son état conducteur, raccorde l'autre connexion du solénoïde à la masse au travers d'une première résistance (4) de mesure, et qui est doté de deux diodes (5, 6) pour le courant induit, lequel passe par le solénoïde lorsque les commutateurs sont ouverts,
- cependant que la première diode (6) est branchée en parallèle par rapport au branchement en série, qui est constitué par le commutateur (3) côté masse et le solénoïde (1),
- cependant que la seconde diode (5) est branchée en parallèle par rapport au branchement en série, qui est constitué par le commutateur (2), lequel est raccordé à la tension (U_{V}) d'alimentation, et le solénoïde (1)
- et cependant que, lorsque les deux commutateurs (2, 3) sont actionnés conjointement, la valeur de la tension (u_{4F}, u_{4L}), qui apparaît au niveau de la résistance (4) de mesure, est ramenée vers l'entrée de la valeur réelle du régulateur (10) de courant en tant que mesure du courant (i₁), lequel passe au travers du solénoïde (1),
**caractérisé en ce**
- **que** une seconde résistance (17) de mesure est disposée entre le commutateur (3) côté masse et le solénoïde (1), et
- **que**, pour un commutateur (3) côté masse toujours commuté dans l'état conducteur, la tension (u₁₇), qui apparaît au niveau de la seconde résistance (17) de mesure, est ramenée vers l'entrée de valeur réelle du régulateur (10) de courant, en tant que mesure du courant (i₁), lequel passe au travers du solénoïde (1).

2. Un étage de sortie à régulation de courant conforme à la revendication n° 1, **caractérisé en ce que** les résistances (4, 17) de mesure sont de calibres égaux.

3. Un étage de sortie à régulation de courant conforme à la revendication n° 1 ou à la revendication n° 2, **caractérisé en ce que** un dispositif (20) de contrôle est doté d'un dispositif (19) de commutation branché en aval, lequel ramène soit la valeur de la tension (u_{4F}, u_{4L}) apparaissant au niveau de la première résistance (4) de mesure, soit la tension (u₁₇) apparaissant au niveau de la seconde résistance (17) de mesure, vers l'entrée de valeur réelle du régulateur (10) de courant.

4. Un étage de sortie à régulation de courant conforme à la revendication n° 3, **caractérisé en ce que** la fermeture et l'ouverture des commutateurs (2, 3) a lieu conjointement, en fonction du rapport d'application, et que le dispositif (19) de commutation ramène la valeur de la tension (u_{4F}, u_{4L}), qui apparaît au niveau de la première résistance (4) de mesure, vers l'entrée de valeur réelle du régulateur (10) de courant.

5. Un étage de sortie à régulation de courant conforme à la revendication n° 3, **caractérisé en ce que** le dispositif (20) de contrôle commute constamment le commutateur (3) côté masse dans sa position conductrice, de façon à ce que seule la fermeture et l'ouverture du commutateur (2), lequel est raccordé à la tension (uᵥ) d'alimentation, a lieu selon le rapport d'application, et que le dispositif (19) de commutation ramène la tension, qui apparaît au niveau de la seconde résistance (17) de mesure, vers l'entrée de valeur réelle du régulateur (10) de courant.
